# EUROPÄISCHE PATENTSCHRIFT

(11) **EP 1 414 907 B1**
(45) Veröffentlichungstag und Bekanntmachung des Hinweises auf die Patenterteilung: **10.09.2014**
(21) Anmeldenummer: 02760264.8
(22) Anmeldetag: 24.07.2002
(51) Int. Cl.: C08L 95/00, C08L 23/04

(54) **THERMOPLASTISCHE FORMMASSEN MIT VERMINDERTER KLEBRIGKEIT**
THERMOPLASTIC MOULDING MATERIALS HAVING REDUCED ADHESIVENESS
MATIERES A MOULER THERMOPLASTIQUES PRESENTANT UNE ADHESIVITE REDUITE

(30) Priorität: 26.07.2001 DE 10136120
(43) Veröffentlichungstag der Anmeldung: 06.05.2004
(73) Patentinhaber: Lucobit AG, 50389 Wesseling (DE)
(72) Erfinder: DELOUX, Laurent, 69115 Heidelberg (DE); RIEGLER, Robert, 67459 Böhl-Iggelheim (DE)
(74) Vertreter: Michalski Hüttermann & Partner Patentanwälte mbB
(86) Internationale Anmeldenummer: PCT/EP2002/008237
(87) Internationale Veröffentlichungsnummer: WO 2003/011975

(56) Entgegenhaltungen:
- EP-A- 0 130 367
- EP-A- 0 223 019
- DE-A- 1 669 638
- DE-B- 1 301 141
- US-A- 3 012 866
- US-A- 5 650 454
- US-B1- 7 241 821

## Beschreibung

Die vorliegende Erfindung betrifft thermoplastische Formmassen, insbesondere auf Basis von Bitumengranulat, mit verminderter Klebrigkeit und deren Verwendung.

Thermoplastische Formmassen auf Basis von Bitumen und Polymer sind im Stand der Technik bekannt.

Bitumen werden bei der schonenden Aufbereitung von Erdölen gewonnen. Hierbei handelt es sich um dunkelfarbige, halbfeste bis springharte, schmelzbare, hochmolekulare Kohlenwasserstoff-Gemische. Die Bitumina sind kolloide Systeme, meist Sole, die in einer öligen Grundmasse (= Maltene) dunkle, harzartige bis kohlenartige Kohlenstoff-reichere Teilchen vom mittleren MG. 300 bis 3000 enthalten (= Asphaltene); man kann aus ihnen z.B. Pentan-lösliche, Heptan-lösliche und andere Anteile abtrennen. Durch Chromatographie oder Destillation erhält man Fraktionen, die entweder besonders reich an Paraffinen, an kondensierten Ringverbindungen (= Naphthene) und aromatischen Kohlenwasserstoffen sind oder die überwiegend aus polaren aromatischen Verbindungen (= Harzen) bestehen. Bitumen wird durch sogenannte Deasphaltierung von geeigneten Erdölen und vergleichbaren Produkten der Kohlehydrierung gewonnen. Die aus dem Stand der Technik bekannten Bitumen sind üblicherweise Destillations-, Hochvakuum- oder geblasene Bitumen. Wird Rohöl mit einem Propan-Butan-Gemisch nahe der kritischen Temperatur extrahiert, fällt ein unlöslicher Rückstand, sogenannter Asphalt an, der durch Destillation raffiniert werden kann. Bei der Herstellung von Oxidationsbitumen durch Durchblasen von Luft erhöht sich der Anteil von Asphaltenen im Bitumen von 10 auf 30%.

Zusätze von Polyolefinen erhöhen die Plastizität und die thermomechanischen Eigenschaften.

In Abhängigkeit des Herstellungsverfahrens weisen Bitumina Asphaltene, Maltene und Harze in unterschiedlichen Gewichtsanteilen auf. Die niedermolekularen öligen Maltene verleihen dem Bitumen adhäsive Eigenschaften. Nachteilig ist, dass thermoplastische Formmassen auf der Basis von Mischungen aus Bitumen und Polymere adhäsiv bzw. klebrig sind. Hierdurch ergeben sich bei der Handhabung solcher thermoplastischen Formmassen, insbesondere bei der Verwendung solcher Materialien aufgrund der Klebrigkeit erhebliche Verarbeitungsnachteile. Aus dem Stand der Technik bekannte Granulate umfassend Mischungen aus Bitumen und Polymer werden klebrig und sind deshalb bereits nach kurzer Zeit nicht mehr rieselfähig. Zur Vermeidung von durch die Klebrigkeit solcher thermoplastischen Formmassen verursachten Verarbeitungsnachteile werden die thermoplastischen Formmassen kaschiert, um beispielsweise bei aus diesen Materialien bestehenden Folien für Dichtungsbahnen die Klebrigkeit zu reduzieren.

Ein weiterer Nachteil ist, dass die niedermolekularen öligen Maltene beispielsweise zur Dichtungsbahnoberfläche migrieren und infolge von Lichteinwirkung saure Oxidationsprodukte bilden, die beispielsweise von Regenwasser ausgewaschen werden und an korrosionsgefährdeten Stellen, wie Zinkrinnen, Korrosion hervorrufen.

Die Schrift DE 1 301 141 offenbart bitumenhaltige Mischungen, enthaltend einen Bindemittelanteil, bestehend aus A) Bitumen, B) Ethylenmischpolymerisaten und C) anderen Polymerisaten, sowie gegebenenfalls einem Füllstoffanteil, wobei der Bindemittelanteil aus A) 30 bis 80 Gewichtsprozent Bitumen einer Penetration nach DIN 1995 von 1 bis 210, B) 19,5 bis 69,5 Gewichtsprozent an Mischpolymerisaten aus 30 bis 97 Gewichtsprozent Ethylen und 70 bis 3 Gewichtsprozent Vinylestern und/oder mischpolymerisierbaren Acryl- und/oder Methacrylverbindungen und C) 0,5 bis 30 Gewichtsprozent Polyisobutylen eines Molekulargewichts von 1000 bis 200 000 und/oder 0,1 bis 5 Gewichtsprozent ölige Homopolymerisate des Butadiens oder ölige Mischpolymerisate des Butadiens mit Styrol oder α-Methylstyrol besteht, wobei sich die Angaben in Gewichtsprozent für die Komponenten A) bis C) auf die Gesamtmenge des Bindemittelanteils beziehen.

Die Schrift DE 1 669 638 offenbart Formmassen auf Basis von Bitumen, EthylenMischpolymerisaten und Polyisobutylen.

Die Schrift US 5 650 454 offenbart einen Kautschukzusatz, welcher quervernetzte Fettsäuren und Stärke umfasst, und vorzugsweise weiterhin einen Träger vorzugsweise einen Bitiumen-Träger, umfasst.

Aufgabe der vorliegenden Erfindung ist es daher, die Nachteile des Standes der Technik zu überwinden, und eine thermoplastische Formmasse auf Basis von Hart-Bitumen, insbesondere Bitumengranulat, und thermoplastischem Polymer zur Verfügung zu stellen die nicht oder zumindest eine deutlich verminderte Klebrigkeit aufweist und zu keiner oder zumindest zu einer deutlich verminderten Zinkkorrosion führt.

Die erfindungsgemäße Aufgabe wird durch die Merkmale der unabhängigen Ansprüche gelöst. Die jeweils nachfolgenden abhängigen Ansprüche geben vorteilhafte Weiterbildungen der Erfindung wieder.

Die erfindungsgemäße Aufgabe wird insbesondere mittels einer thermoplastischen Formmasse mit verminderter Klebrigkeit gelöst, worin die thermoplastische Formmasse umfasst:
a) ≥ 20 Gew.-% Hartbitumen mit einer Penetration entsprechend DIN 52010 bei 25°C von ≤ 3 x 1/10 mm und einem Erweichungspunkt RNK entsprechend DIN 52011 von ≥ 120°C;
b) ≥ 20 Gew.-% thermoplastisches Polymer; und
c) 0 Gew.-% - 40 Gew.-% weitere Zusätze, umfassend Füllstoffe, Ruß, Gleitmittel, Flammschutzmittel, Stabilisatoren und/oder Pigmente, wobei die jeweiligen Gewichtsangaben auf die Gesamtmasse der thermoplastischen Formmasse bezogen sind.

Die erfindungsgemäßen Formmassen lassen sich beispielsweise so herstellen, indem man die Komponenten nacheinander in beliebiger Reihenfolge oder zusammen in einen Extruder gibt und dann die Masse aus den Komponenten anschließend extrudiert. Die erfindungsgemäßen Formmassen können in Form von Granulat, Bahnen, Blöcken oder dergleichen vorliegen. Die erfindungsgemäßen Formmassen können praktisch in jede Form gebracht werden.

Das Hartbitumen kann als Masse und/oder in Granulatform eingesetzt werden.

Eine weitere Ausführungsform der erfindungsgemäßen thermoplastischen Formmasse umfasst:
a) ≥ 20 Gew.-% Hartbitumen , vorzugsweise 20 Gew.-% - 50 Gew.-% Hartbitumen ;
b) ≥ 20 Gew.-% thermoplastisches Polymer; vorzugsweise 20 Gew.-% - 80 Gew.-% thermoplastisches Polymer, 20 Gew.-% - 50 Gew.-% ; und
c) 0 Gew.-% - 40 Gew.-% Zusätze.

Die Gewichtsangaben in Gew.-%, wenn nicht anders angegeben, beziehen sich jeweils auf die Gesamtmasse der thermoplastischen Formmasse. Die Penetration wurde nach DIN 52010 bestimmt.

Die Eigenschaften der erfindungsgemäßen thermoplastischen Formmassen mit verminderter Klebrigkeit lassen sich durch Zusätze, beispielsweise von Weichmachern, Füllstoffen, Stabilisatoren und/oder Additiven breit variieren.

Die Verwendung von Bitumengranulat im Vergleich zu flüssigem Bitumen ist vorteilhaft, da die Dosierung von flüssigem Bitumen es erforderlich macht, dass dieser permanent erhitzt werden muß, was einen hohen Energiebedarf verursacht. Ferner ist für die Verarbeitung von flüssigem Bitumen eine spezielle Dosierungsvorrichtung erforderlich.

Der Bitumenanteil der erfindungsgemäßen thermoplastischen Formmasse kann vollständig oder teilweise Hartbitumen sein. Das Hartbitumen kann in Granulatform oder als Masse verfügbar sein. Bevorzugt ist aber, wenn der Bitumenanteil der erfindungsgemäßen thermoplastischen Formmasse vollständig Hartbitumen (kann in Granulatform oder als Masse verfügbar sein) ist. Besonders vorteilhaft ist es, wenn als Bitumen Hartbitumen verwendet wird, das entsprechend DIN 52010 eine Penetration bei 25°C von ≤ 6 x 1/10 mm und einem Erweichungspunkt RuK entsprechend DIN 52011 von ≥ 90°C aufweist. Weiter bevorzugt ist, wenn als Bitumen Hartbitumen verwendet wird, das entsprechend DIN 52010 eine Penetration bei 25°C von ≤ 3 x 1/10 mm und einem Erweichungspunkt RuK entsprechend DIN 52011 von ≥ 120°C aufweist. Noch bevorzugter ist, wenn als Bitumen ein Hartbitumen verwendet wird, das entsprechend DIN 52010 eine Penetration bei 25°C von ≤ 1 x 1/10 mm und einem Erweichungspunkt RuK entsprechend DIN 52011 von ≥ 140°C aufweist. Durch die Verwendung von Hartbitumen mit den vorgenannten Eigenschaften, lässt sich die Klebrigkeit der erfindungsgemäßen thermoplastischen Formmasse deutlich verringern und in einigen Fällen sogar vollständig beseitigen. Außerdem ist die Dosierung von Bitumengranulat mit anderen Stoffen, beispielsweise thermoplastischen Polymer(en), wesentlich einfacher, weil Bitumengranulat, aufgrund seiner Granulatform nicht flüssig, wie bei Bitumen üblich, sondern in fester Form zugesetzt, gemischt und/oder verarbeitet werden kann.

Erfindungsgemäß geeignet ist auch die Verwendung von Hartbitumen und/oder Bitumengranulat die nach DIN 52010 eine Penetration bei 25°C von ≤ 5 x 1/10 mm, insbesondere von ≤ 4 x 1/10 mm, bevorzugt ≤ 3 x 1/10 mm, weiter bevorzugt ≤ 2 x 1/10 mm, noch bevorzugter ≤ 1 x 1/10 mm und einem Erweichungspunkt RuK entsprechend DIN 52011 von ≥ 90°C , vorzugsweise von ≥ 100°C und weiter bevorzugt von ≥ 110°C, aufweisen. Die Erweichungspunkt Temperaturen können aber auch ≥ 105°C, ≥ 115°C, ≥ 120°C, ≥ 125°C, ≥ 130°C oder ≥ 135°C sein.

Geeignete thermoplastische Polymere umfassen beispielsweise alle aus linearen oder thermolabil vernetzten Polymer-Molekülen bestehenden Kunststoffe, z.B. Polyolefine, Vinylpolymere, Polyamide, Polyester, Polyacetale, Polycarbonate, Polyurethane und Ionomere. Die thermoplastischen Polymere können auch Polymere, deren Eigenschaftsprofil sich von dem der Massenkunststoffe bis zu dem der Hochleistungskunststoffe (Spezialkunststoffe) erstreckt, umfassen. Zu den thermoplastischen Polymeren gehöhren auch thermoplastisch verarbeitbare Kunststoffe mit ausgeprägten entropieelastischen Eigenschaften, die sogenannten thermoplastischen Elastomeren. Eine Übergangsgruppe zwischen diesen beiden Kunststoffklassen bilden die als technische Thermoplaste bezeichneten Polymere, die ebenfalls geeignet sind.

Besonders bevorzugt ist das thermoplastische Polymer der erfindungsgemäßen thermoplastischen Formmasse ein Ethylencopolymerisat von Ethylen und Vinylester, von Ethylen und α-Olefin, ein Alkylester einer Alkensäure und/oder Mischungen davon. Die Formmasse kann vorzugsweise auch ein Gemisch verschiedener Ethylencopolymerisate umfassen.

Noch bevorzugter ist, wenn der Vinylester ein Ester einer C₂-C₃ Alkancarbonsäure, der Alkylester ein C₁-C₄-Alkylester einer C₃-C₄ Alkensäure und das Ethylen-/α-Olefin-Copolymerisat ein lineares Copolymerisat von Ethylen und eines oder mehrerer gleicher oder unterschiedlicher α-Olefine ist, wobei das Ethylen-/α-Olefin-Copolymerisat vorzugsweise eine Dichte von 0,87 - 0,92 g/cm³ und/oder einen Schmelzindex von 0,5 -20,0 g/10 min aufweist.

Ebenfalls geeignete Polymere sind ausgewählt aus der Gruppe umfassend lineares Polyethylen, vorzugsweise Clearflex®, Luflexen®, Ethylen-n-Butylacrylat-Copolymeren mit einem n-Butylacrylatgehalt, vorzugsweise Lucofin®, Polypropylen modifiziert mit Ethylenpropylenkautschuk, vorzugsweise Adflex®. Besonders geeignet ist ein flexibel, vorzugsweise elastisches, Polypropylen, insbesondere ein Block Copolymer, wie Adflex®, erhältlich bei der Firma Basell.

In der am meisten bevorzugten Ausführungsform umfasst die erfindungsgemäße thermoplastische Formmasse:
a) 20 Gew.-% - 50 Gew.-% Hartbitumen , mit einer Penetration bei 25°C von ≤ 3 x 1/10 mm und einem Erweichungspunkt von ≥ 120°C;
b) 0 Gew.-% - 50 Gew.-% eines Ethylencopolymerisats, das 10 Gew.-% - 30 Gew.- % eines Vinylesters von einer C₂-C₃ Alkancarbonsäure und/oder eines C₁-C₄-Alkylesters einer C₃-C₄ Alkensäure und/oder Gemische davon, einpolymerisiert, aufweist;
c) ≥ 20 Gew.-% eines im wesentlichen linearen Copolymerisats von Ethylen mit einem oder mehreren α-Olefin, wobei dieses Copolymerisat eine Dichte von 0,87 - 0,92 g/cm³ und/oder einen Schmelzindex von 0,5 -20,0 g/10 min aufweist; und
d) 0 Gew.-% - 40 Gew.-% Zusätze, jeweils bezogen auf die Gesamtmasse der thermoplastischen Formmasse.

Die erfindungsgemäße thermoplastische Formmasse weist keine oder eine zumindest deutlich verminderte Klebrigkeit auf. Die verminderte Klebrigkeit ist insbesondere darauf zurückzuführen, dass kein oder praktisch kein Ölfilm an der äußeren Oberfläche der erfindungsgemäßen thermoplastischen Formmasse zu beobachten ist.

Es hat sich gezeigt, dass aus den erfindungsgemäßen Formmassen direkt nach deren Herstellung gepresste 2 mm dicke Platten, bei Lagerung von ≥ 24 Stunden, vorzugsweise ≥ 2 Tage, bevorzugt ≥ 5 Tage, in einem Klimaraum bei 23 °C und einer relativen Luftfeuchte von 50%, auf der äußeren Oberfläche der erfindungsgemäßen Formmassenplatten, bei einer Sichtprobe mit dem bloßen Auge eines Fachmanns, keinen sichtbaren Ölfilm aufweisen. Langzeitlagerungstests haben gezeigt, dass direkt nach deren Herstellung gepresste 2 mm dicke Platten, bei Lagerung in einem Klimaraum bei 23 °C und einer relativen Luftfeuchte von 50%, selbst nach ≥ 4 Wochen, vorzugsweise ≥ 3 Monate und insbesondere ≥ 6 Monate, auf der äußeren Oberfläche der erfindungsgemäßen Formmassenplatten, bei einer Sichtprobe mit dem bloßen Auge eines Fachmanns, keinen sichtbaren Ölfilm aufweisen können.

Diese erfindungsgemäßen Formmassen fühlen sich bei Berührung mit der Hand trocken an im Gegensatz zu Formmassen die auf der äußeren Oberfläche einen Ölfilm aufweisen. Ferner ist die Klebrigkeit der erfindungsgemäßen Formmassen im Vergleich zu Formmassen die auf deren Oberfläche einen Ölfilm aufweisen deutlich reduziert.

Bevorzugte erfindungsgemäße Formmassen, insbesondere Formmassen in Form von Granulat mit einer Granulatkorngröße im wesentlichen von 3 mm - 4 mm, bleiben nach einer Lagerung von ≥ 4 Wochen in einem Klimaraum bei 23 °C und einer relativen Luftfeuchte von 50% rieselfähig, d.h. dosierbar für Extrusionsanwendungen, so dass der Durchfluss gemessen in [s / 5 kg] von 5 kg Granulat, mit einer Granulatkorngröße im wesentlichen von 3 mm - 4 mm, durch einen Trichter mit einem 100 mm Loch-Durchmesser weniger als 50 Sekunden, vorzugsweise ≤ 45 Sekunden, bevorzugt ≤ 35 Sekunden, weiter bevorzugt ≤ 30 Sekunden, noch weiter bevorzugt ≤ 25 Sekunden, insbesondere ≤ 15 Sekunden, besonders bevorzugt ≤ 10 Sekunden und am meisten bevorzugt ≤ 5 Sekunden dauert, um durch das Loch mit dem Loch-Durchmesser von 100 mm zu fließen.

Die nasse äußere Oberfläche der erfindungsgemäßen Formmasse weist einen pH ≥ 4, vorzugsweise pH ≥ 5, bevorzugt pH ≥ 5,5 und noch bevorzugter pH ≥ 6 auf. Der pH - Wert wird bestimmt, indem man aus der erfindungsgemäßen Formmasse 2 mm dicke Platten presst und 4 Wochen einem Q-UV Schnellbewitterungsgerät aussetzt und anschließend an der nassen äußeren Oberfläche den pH - Wert bestimmt. Ein pH Wert von ≥ 4 ist vorteilhaft, weil die äußere Oberfläche der Formmasse in Gegenwart von Wasser allenfalls schwach sauer reagiert, was eine deutlich verminderte Metallkorrosion zur Folge hat. So tritt bei Verwendung der erfindungsgemäßen Formmasse beispielsweise bei Zinkrinnen keine oder eine deutlich verlangsamte Korrosion im Vergleich zu üblichen im Stand der Technik bekannten Bitumenmassen auf.

Die erfindungsgemäßen thermoplastischen Formmassen lassen sich insbesondere zur Herstellung von Formkörpern verwenden.

Ferner lassen sich die erfindungsgemäßen thermoplastischen Formmassen als Folien, als Spritzgußteile, als elektrisches Isoliermaterial, als Straßenbaumaterialien, als Dachbahnen und/oder als Abdichtungsmittel, vorzugsweise gegen Grundwasser, und besonders bevorzugt als Dach- und/oder Dichtungsbahnen, und am meisten bevorzugt als Abdichtungsbahnen für den Hoch- und Tiefbau, verwenden.

Bei den erfindungsgemäßen thermoplastischen Formmassen mit verminderter Klebrigkeit handelt es sich um Gemische die Hartbitumen sowie thermoplastisches Polymer aufweisen, die im erweichten Zustand durch Pressen, Extrudieren, Spritzgießen oder andere Formgebungsverfahren zu Formteilen verarbeitet werden können.

Weitere vorteilhafte Ausführungsformen sind in den nachfolgenden Beispielen 1 und 2 wiedergegeben.

### Beispiel 1

In einen Brabender-Kneter wurden 38 Gewichtsteile eines linearen Polyethylen mit einer Dichte von 0,911 g/cm³ und einem Schmelzindex MFR 190°C/2,16 kg von 1,0 g/10 min - Clearflex® FGBO, im Handel erhältlich von der Firma Polimeri -, 30 Gewichtsteile eines Ethylen-n-Butylacrylat-Copolymeren mit einem n-Butylacrylatgehalt von 15 Gew.-%, bezogen auf das Ethylen-n-Butylacrylat-Copolymer, und einem Schmelzindex MFR 190°C/2,16 kg von 1,5 g/10 min - Lucofin® 1400H, im Handel erhältlich von der Firma Lucobit AG- und 32 Gewichtsteile eines Bitumengranulats - Nygran®, im Handel erhältlich von der Firma Nynas -, das eine Penetration nach DIN 52010 von 1 x 1/10 mm und einen Erweichungspunkt RuK von 140°C aufweist, bei einer Knetzeit von 30 min bei 180°C zu einer homogenen Mischung verarbeitet.

Aus der Mischung wurden 2 mm dicke Platten gepresst. Diese Platten sind trocken, d.h. kein Ölfilm auf der äußeren Oberfläche, flexibel und lassen sich mittels handelsüblichen Warmgas-Schweißgeräten hervorragend materialhomogen verschweißen. Nach 4 Wochen in einem Q-UV Schnellbewitterungsgerät wurde an der nassen äußeren Oberfläche ein pH > 5 gemessen.

Granulat aus Beispiel 1 mit einer Granulatkorngröße im wesentlichen von 3 mm - 4 mm bleibt nach einer Lagerung von 4 Wochen in einem Klimaraum bei 23 °C und einer relativen Luftfeuchte von 50% rieselfähig, d.h. dosierbar für Extrusionsanwendungen. Es wurden 5 kg Granulate aus Beispiel 1 mit einer Granulatkorngröße im wesentlichen von 3 mm - 4 mm in einen Trichter mit einem 100 mm Loch-Durchmesser gegeben und der Durchfluss s / 5 kg gemessen. Das Granulat aus Beispiel 1 ist gut rieselfähig und es dauert weniger als 10 Sekunden, um durch ein Loch mit einem Lochdurchmesser von 100 mm zu fließen.

### Beispiel 2

In einen Brabender-Kneter wurden 19 Gewichtsteile eines linearen Polyethylen mit einer Dichte von 0,918 g/cm³ und einem Schmelzindex MFR 190°C/2,16 kg von 1,0 g/10 min - Luflexen® 18 TFA, im Handel erhältlich von der Firma Elenac jetzt Basell -, 19 Gewichtsteile eines linearen Polyethylen mit einer Dichte von 0,903 g/cm³ und einem Schmelzindex MFR 190°C/2,16 kg von 1,5 g/10 min - Luflexen® 0322 H, im Handel erhältlich von der Firma Elenac jetzt Basell-, 30 Gewichtsteile eines Ethylen-n-Butylacrylat-Copolymeren mit einem n-Butylacrylatgehalt von 15 Gew.-%, bezogen auf das Ethylen-n-Butylacrylat-Copolymer, und einem Schmelzindex MFR 190°C/2,16 kg von 1,5 g/10 min - Lucofin® 1400H, im Handel erhältlich von der Firma Lucobit AG - und 32 Gewichtsteile eines Bitumengranulats - Nygran®, im Handel erhältlich von der Firma Nynas -, das eine Penetration nach DIN 52010 von 1 x 1/10 mm und einen Erweichungspunkt RuK von 140°C aufweist, bei einer Knetzeit von 30 min bei 180°C zu einer homogenen Mischung verarbeitet.

Aus der Mischung wurden 2 mm dicke Platten gepresst. Diese Platten sind trocken, d.h. es bildet sich kein sichtbarer Ölfilm auf der äußeren Oberfläche, flexibel und lassen sich mittels handelsüblichen Warmgas-Schweißgeräten hervorragend materialhomogen verschweißen. Nach 4 Wochen in einem Q-UV Schnellbewitterungsgerät wurde an der nassen äußeren Oberfläche ein pH > 5 gemessen.

Granulat aus Beispiel 2 mit einer Granulatkorngröße im wesentlichen von 3 mm - 4 mm bleibt nach einer Lagerung von 4 Wochen in einem Klimaraum bei 23 °C und einer relativen Luftfeuchte von 50% rieselfähig, d.h. dosierbar für Extrusionsanwendungen. Es wurden 5 kg Granulat mit einer Granulatkorngröße im wesentlichen von 3 mm - 4 mm aus Beispiel 2 in einen Trichter mit einem 100 mm Loch-Durchmesser gegeben und der Durchfluss s / 5 kg gemessen. Das Granulat aus Beispiel 2 ist gut rieselfähig und es dauert weniger als 10 Sekunden, um durch das Loch mit einem Durchmesser von 100 mm zu fließen.

### Beispiel 3

In einen Brabender-Kneter wurden 38 Gewichtsteile eines linearen Polyethylen mit einer Dichte von 0,911 g/cm³ und einem Schmelzindex MFR 190°C/2,16 kg von 1,0 g/10 min - Clearflex® FGBO, im Handel erhältlich von der Firma Polimeri -, 30 Gewichtsteile eines Ethylen-n-Butylacrylat-Copolymeren mit einem n-Butylacrylatgehalt von 15 Gew.-%, bezogen auf das Ethylen-n-Butylacrylat-Copolymer, und einem Schmelzindex MFR 190°C/2,16 kg von 1,5 g/10 min - Lucofin® 1400H, im Handel erhältlich von der Firma Lucobit AG - und 32 Gewichtsteile eines harten Bitumens - SBC, im Handel erhältlich von der Firma Shell -, das eine Penetration nach DIN 52010 von < 1 x 1/10 mm und einen Erweichungspunkt RuK von etwa 125°C aufweist, bei einer Knetzeit von 30 min bei 180°C zu einer homogenen Mischung verarbeitet.

Aus der Mischung wurden 2 mm dicke Platten gepresst. Diese Platten sind trocken, d.h. kein Ölfilm auf der äußeren Oberfläche, flexibel und lassen sich mittels handelsüblichen Warmgas-Schweißgeräten hervorragend materialhomogen verschweißen. Nach 4 Wochen in einem Q-UV Schnellbewitterungsgerät wurde an der nassen äußeren Oberfläche ein pH > 4 gemessen.

Granulat aus Beispiel 3 mit einer Granulatkomgröße im wesentlichen von 3 mm - 4 mm bleibt nach einer Lagerung von 4 Wochen in einem Klimaraum bei 23 °C und einer relativen Luftfeuchte von 50% rieselfähig, d.h. dosierbar für Extrusionsanwendungen. Es wurden 5 kg Granulate aus Beispiel 3 mit einer Granulatkorngröße im wesentlichen von 3 mm - 4 mm in einen Trichter mit einem 100 mm Loch-Durchmesser gegeben und der Durchfluss s / 5 kg wurde gemessen. Das Granulat aus Beispiel 3 ist gut rieselfähig und es dauert weniger als 10 Sekunden, um durch das Loch mit einem Durchmesser von 100 mm zu fließen.

### Vergleichsversuch A

In einen Brabender-Kneter wurden 38 Gewichtsteile eines linearen Polyethylen mit einer Dichte von 0,911 g/cm³ und einem Schmelzindex MFR 190°C/2,16 kg von 1,0 g/10 min - Clearflex® FGBO, im Handel erhältlich von der Firma Polimeri -, 30 Gewichtsteile eines Ethylen-n-Butylacrylat-Copolymeren mit einem n-Butylacrylatgehalt von 15 Gew.-%, bezogen auf das Ethylen-n-Butylacrylat-Copolymer, und einem Schmelzindex MFR 190°C/2,16 kg von 1,5 g/10 min - Lucofin® 1400H, im Handel erhältlich von der Firma Lucobit AG - und 32 Gewichtsteile eines harten Bitumens SBA, im Handel erhältlich von der Firma Shell -, das eine Penetration nach DIN 52010 von < 6 x 1/10 mm und einen Erweichungspunkt RuK von etwa 92°C aufweist, bei einer Knetzeit von 30 min bei 180°C zu einer homogenen Mischung verarbeitet.

Aus der Mischung wurden 2 mm dicke Platten gepresst. Diese Platten sind trocken, d.h. kein Ölfilm auf der äußeren Oberfläche, flexibel und lassen sich mittels handelsüblichen Warmgas-Schweißgeräten hervorragend materialhomogen verschweißen.

Granulat aus Beispiel 4 mit einer Granulatkorngröße im wesentlichen von 3 mm - 4 mm bleibt nach einer Lagerung von 4 Wochen in einem Klimaraum bei 23 °C und einer relativen Luftfeuchte von 50% rieselfähig, d.h. dosierbar für Extrusionsanwendungen. Es wurden 5 kg Granulate aus Beispiel 4 mit einer Granulatkorngröße im wesentlichen von 3 mm - 4 mm in einen Trichter mit einem 100 mm Loch-Durchmesser gegeben und der Durchfluss s / 5 kg wurde gemessen. Das Granulat aus Beispiel 4 ist gut rieselfähig und es dauert weniger als 10 Sekunden, um durch das Loch mit einem Durchmesser von 100 mm zu fließen.

### Vergleichsversuch B

In einen Brabender-Kneter wurden 67 Gewichtsteile eines flexiblen Polypropylen modifiziert mit Ethylenpropylenkautschuk und mit einem Schmelzindex MFR 230°C/2,16 kg von 7,0 g/10 min - Adflex X100F, im Handel erhältlich von Basell -, 30 Gewichtsteile eines harten Bitumens - SBA, im Handel erhältlich von der Firma Shell -, das eine Penetration nach DIN 52010 von < 6 x 1/10 mm und einen Erweichungspunkt RuK von ca. 92°C aufweist, bei einer Knetzeit von 30 min bei 180°C zu einer homogenen Mischung verarbeitet.

Aus der Mischung wurden 2 mm dicke Platten gepresst. Diese Platten sind trocken, d.h. kein Ölfilm auf der äußeren Oberfläche, flexibel und lassen sich mittels handelsüblichen Warmgas-Schweißgeräten hervorragend materialhomogen verschweißen.

Granulat aus Beispiel 5 mit einer Granulatkorngröße im wesentlichen von 3 mm - 4 mm bleibt nach einer Lagerung von 4 Wochen in einem Klimaraum bei 23 °C und einer relativen Luftfeuchte von 50% rieselfähig, d.h. dosierbar für Extrusionsanwendungen. Es wurden 5 kg Granulate aus Beispiel 5 mit einer Granulatkorngröße im wesentlichen von 3 mm - 4 mm in einen Trichter mit einem 100 mm Loch-Durchmesser gegeben und der Durchfluss s / 5 kg wurde gemessen. Das Granulat aus Beispiel 5 ist gut rieselfähig und es dauert weniger als 10 Sekunden, um durch das Loch mit einem Durchmesser von 100 mm zu fließen.

### Vergleichsversuch 1

In einen Brabender-Kneter wurden 38 Gewichtsteile eines linearen Polyethylen mit einer Dichte von 0,911 g/cm³ und einem Schmelzindex MFR 190°C/2,16 kg von 1,0 g/10 min - Clearflex® FGBO, im Handel erhältlich von der Firma Polimeri -, 30 Gewichtsteile eines Ethylen-n-Butylacrylat-Copolymeren mit einem n-Butylacrylatgehalt von 15 Gew.-%, bezogen auf das Ethylen-n-Butylacrylat-Copolymer, und einem Schmelzindex MFR 190°C/2,16 kg von 1,5 g/10 min - Lucofin® 1400H, im Handel erhältlich von der Firma Lucobit AG - und 32 Gewichtsteile eines Destillationsbitumen - Bitumen 57/70, im Handel erhältlich von der Firma Shell -, das eine Penetration nach DIN 52010 von 65 x 1/10 mm und einen Erweichungspunkt RuK von etwa 50 °C aufweist, bei einer Knetzeit von 30 min bei 180°C zu einer homogenen Mischung verarbeitet.

Aus der Mischung wurden 2 mm dicke Platten gepresst. Im Vergleich zu den Beispielen 1 und 2 sind diese Platten klebrig und die äußere Oberfläche ist mit einem dünnen Ölfilm bedeckt. Nach 4 Wochen in einem Q-UV Schnellbewitterungsgerät wurde an der nassen äußeren Oberfläche ein pH < 3 gemessen.

Granulat aus Vergleichsbeispiel 1 mit einer Granulatkorngröße im wesentlichen von 3 mm - 4 mm bleibt nach einer Lagerung von 4 Wochen in einem Klimaraum bei 23 °C und einer relativen Luftfeuchte von 50% rieselfähig, d.h. dosierbar für Extrusionsanwendungen. Es wurden 5 kg Granulate aus Vergleichsbeispiel 1 mit einer Granulatkorngröße im wesentlichen von 3 mm - 4 mm in einen Trichter mit einem 100 mm Loch-Durchmesser gegeben und der Durchfluss s / 5 kg wurde gemessen. Das Granulat aus Vergleichsbeispiel 1 ist noch rieselfähig, es dauert aber mehr als 50 Sekunden, um durch das Loch mit einem Durchmesser von 100 mm zu fließen.

### Vergleichsversuch 2

In einen Brabender-Kneter wurden 38 Gewichtsteile eines linearen Polyethylen mit einer Dichte von 0,911 g/cm³ und einem Schmelzindex MFR 190°C/2,16 kg von 1,0 g/10 min - Clearflex® FGBO, im Handel erhältlich von der Firma Polimeri -, 30 Gewichtsteile eines Ethylen-n-Butylacrylat-Copolymeren mit einem n-Butylacrylatgehalt von 15 Gew.-%, bezogen auf das Ethylen-n-Butylacrylat-Copolymer, und einem Schmelzindex MFR 190°C/2,16 kg von 1,5 g/10 min - Lucofin® 1400H, im Handel erhältlich von der Firma Lucobit AG - und 32 Gewichtsteile eines Hochvakuumbitumen - Bitumen 70/100, im Handel erhältlich von der Firma Shell -, das eine Penetration nach DIN 52010 von etwa 85 x 1/10 mm und einen Erweichungspunkt RuK von etwa 45 °C aufweist, bei einer Knetzeit von 30 min bei 180°C zu einer homogenen Mischung verarbeitet.

Aus der Mischung wurden 2 mm dicke Platten gepresst. Im Vergleich zu den Beispielen 1 und 2 sind diese Platten klebrig und die Oberfläche ist mit einem dünnen Ölfilm bedeckt. Nach 4 Wochen in einem Q-UV Schnellbewitterungsgerät wurde an der nassen äußeren Oberfläche ein pH < 3 gemessen.

Granulat aus Vergleichsbeispiel 2 mit einer Granulatkorngröße im wesentlichen von 3 mm - 4 mm bleibt nach einer Lagerung von 4 Wochen in einem Klimaraum bei 23 °C und einer relativen Luftfeuchte von 50% rieselfähig, d.h. dosierbar für Extrusionsanwendungen. Es wurden 5 kg Granulate aus Vergleichsbeispiel 2 mit einer Granulatkorngröße im wesentlichen von 3 mm - 4 mm in einen Trichter mit einem 100 mm Loch-Durchmesser gegeben und der Durchfluss s / 5 kg wurde gemessen. Das Granulat aus Vergleichsbeispiel 2 ist noch rieselfähig, es dauert aber mehr als 70 Sekunden, um durch das Loch mit einem Durchmesser von 100 mm zu fließen.

## Patentansprüche

1. Thermoplastische Formmassen mit verminderter Klebrigkeit,
**dadurch gekennzeichnet, dass** die thermoplastische Formmasse umfasst:
a) ≥ 20 Gew.-% Hartbitumen mit einer Penetration entsprechend DIN 52010 bei 25°C von ≤ 3 x 1/10 mm und einem Erweichungspunkt RNK entsprechend DIN 52011 von ≥ 120°C;
b) ≥ 20 Gew.% thermoplastisches Polymer; und
c) 0 Gew.% - 40 Gew.-% weitere Zusätze, umfassend Füllstoffe, Ruß, Gleitmittel, Flammschutzmittel, Stabilisatoren und/oder Pigmente,
wobei die jeweiligen Gewichtsangaben auf die Gesamtmasse der thermoplastischen Formmasse bezogen sind.

2. Thermoplastische Formmassen mit verminderter Klebrigkeit nach Anspruch 1, **dadurch gekennzeichnet, dass** die thermoplastische Formmasse umfasst:
a) 20 Gew.-%-50 Gew.-% Hartbitumen;
b) 20 Gew.-% - 80 Gew.-% thermoplastisches Polymer; und
c) 0 Gew.-% - 40 Gew.-% Zusätze; wobei die jeweiligen Gewichtsangaben auf die Gesamtmasse der thermoplastischen Formmasse bezogen sind.

3. Thermoplastische Formmassen nach Anspruch 1 oder 2,
**dadurch gekennzeichnet, dass** der Bitumenanteil der thermoplastischen Formmasse ausschließlich ein Hartbitumen ist.

4. Thermoplastische Formmassen nach einem der vorherigen Ansprüche,
**dadurch gekennzeichnet, dass** das thermoplastische Polymer ein Ethylencopolymerisat von Ethylen und Vinylester, von Ethylen und α-Olefin, ein Alkylester einer Alkensäure und/oder Mischungen davon umfaßt.

5. Thermoplastische Formmassen nach Anspruch 4,
**dadurch gekennzeichnet, dass** der Vinylester ein Ester einer C₂-C₃ Alkancarbonsäure, dass der Alkylester ein C₁-C₄-Alkylester einer C₃-C₄ Alkensäure und das Ethylen-/α-Olefin-Copolymerisat ein lineares Copolymerisat von Ethylen und eines oder mehrerer gleicher oder unterschiedlicher α-Olefine ist.

6. Thermoplastische Formmassen nach Anspruch 5,
**dadurch gekennzeichnet, dass** das Ethylen-/α-Olefin-Copolymerisat eine Dichte von 0,87 - 0,92 g/cm³ und/oder einen Schmelzindex von 0,5 -20,0 g/10 min aufweist.

7. Thermoplastische Formmassen nach einem der vorherigen Ansprüche,
**dadurch gekennzeichnet, dass** die thermoplastische Formmasse umfasst:
a) 20 Gew.-% - 50 Gew.-% Hartbitumen, mit einer Penetration entsprechend DIN 52010 bei 25°C von ≤ 3 x 1/10 mm und einem Erweichungspunkt RNK entsprechend DIN 52011 von ≥ 120°C;
b) 0 Gew.-% - 50 Gew.-% eines Ethylencopolymerisats, das 10 Gew.-% - 30 Gew.-% eines Vinylesters von einer C₂-C₃ Alkancarbonsäure und/oder eines C₁-C₄-Alkylesters einer C₃-C₄ Alkensäure und/oder Gemische davon, einpolymerisiert, aufweist;
c) ≥ 20 Gew.-% eines im wesentlichen linearen Copolymerisats von Ethylen mit einem oder mehreren α-Olefin, wobei dieses Copolymerisat eine Dichte von 0,87 - 0,92 g/cm³ und/oder einen Schmelzindex von 0,5 -20,0 g/10 min aufweist; und
d) 0 Gew.-% - 40 Gew.-% Zusätze, jeweils bezogen auf die Gesamtmasse der thermoplastischen Formmasse.

8. Thermoplastische Formmassen nach einem der vorherigen Ansprüche,
**dadurch gekennzeichnet, dass** die nasse äußere Oberfläche der Formmasse einen pH ≥ 4 aufweist.

9. Verwendung der thermoplastischen Formmassen nach einem der vorherigen Ansprüche zur Herstellung von Formkörpern.

10. Verwendung der thermoplastischen Formmassen nach einem der Ansprüche 1-8 als Folien, als Spritzpußteile, als elektrisches Isoliermaterial, als Straßenbaumaterialien, als Dachbahn und/oder als Abdichtungsmittel.

## Claims

1. Thermoplastic moulding compositions with reduced tack,
**characterized in that** the thermoplastic moulding composition comprises:
a) ≥ 20% by weight of hard bitumen with a penetration value in accordance with DIN 52010 at 25°C ≤ 3 x 1/10 mm and with a ring-and-ball softening point in accordance with DIN 52011 ≥ 120°C;
b) ≥ 20% by weight of thermoplastic polymer; and
c) from 0% by weight to 40% by weight of other additions comprising fillers, carbon black, lubricants, flame retardants, stabilizers and/or pigments,
wherein the respective weights stated are based on the entirety of the thermoplastic moulding composition.

2. Thermoplastic moulding compositions with reduced tack according to Claim 1,
**characterized in that** the thermoplastic moulding composition comprises:
a) from 20% by weight to 50% by weight of hard bitumen;
b) from 20% by weight to 80% by weight of thermoplastic polymer; and
c) from 0% by weight to 40% by weight of additions; wherein the respective weights stated are based on the entirety of the thermoplastic moulding composition.

3. Thermoplastic moulding compositions according to Claim 1 or 2,
**characterized in that** the bitumen content of the thermoplastic moulding composition is exclusively a hard bitumen.

4. Thermoplastic moulding compositions according to any of the preceding claims,
**characterized in that** the thermoplastic polymer comprises an ethylene copolymer of ethylene and vinyl ester, of ethylene and α-olefin, an alkyl ester of an alkenoic acid and/or a mixture thereof.

5. Thermoplastic moulding compositions according to Claim 4,
**characterized in that** the vinyl ester is an ester of a C₂-C₃ alkanecarboxylic acid, that the alkyl ester is a C₁-C₄-alkyl ester of a C₃-C₄ alkenoic acid and the ethylene/α-olefin copolymer is a linear copolymer of ethylene and of one or more identical or different α-olefins.

6. Thermoplastic moulding compositions according to Claim 5,
**characterized in that** the density of the ethylene/α-olefin copolymer is from 0.87 to 0.92 g/cm³ and/or its melt index is from 0.5 to 20.0 g/10 min.

7. Thermoplastic moulding compositions according to any of the preceding claims,
**characterized in that** the thermoplastic moulding composition comprises:
a) from 20% by weight to 50% by weight of hard bitumen with a penetration value in accordance with DIN 52010 at 25°C ≤ 3 x 1/10 mm and with a ring-and-ball softening point in accordance with DIN 52011 ≥ 120°C;
b) from 0% by weight to 50% by weight of an ethylene copolymer which comprises, incorporated into the polymer, from 10% by weight to 30% by weight of a vinyl ester of a C₂-C₃ alkanecarboxylic acid and/or of a C₁-C₄-alkyl ester of a C₃-C₄ alkenoic acid and/or a mixture thereof;
c) ≥ 20% by weight of an essentially linear copolymer of ethylene with one or more α-olefins, wherein the density of this copolymer is from 0.87 to 0.92 g/cm³ and/or its melt index is from 0.5 to 20.0 g/10 min; and
d) from 0% by weight to 40% by weight of additions, based in each case on the entirety of the thermoplastic moulding composition.

8. Thermoplastic moulding compositions according to any of the preceding claims,
**characterized in that** the pH of the wet exterior surface of the moulding composition is ≥ 4.

9. Use of the thermoplastic moulding compositions according to any of the preceding claims for the production of mouldings.

10. Use of the thermoplastic moulding compositions according to any of Claims 1 - 8 as foils, as injection mouldings, as electrical insulation material, as road construction materials, as roof sheeting and/or as sealing means.

## Revendications

1. Matériaux de moulage thermoplastiques à adhésivité réduite, **caractérisés en ce que** le matériau de moulage thermoplastique comprend :
a) ≥ 20 % en poids de bitume dur présentant une pénétration selon DIN 52010 à 25 °C ≤ 3 x 1/10 mm et un point de ramollissement RuK selon DIN 52011 ≥ 120 °C ;
b) ≥ 20 % en poids d'un polymère thermoplastique ; et
c) 0 % en poids à 40 % en poids d'additifs supplémentaires, comprenant des charges, du noir de carbone, des lubrifiants, des agents ignifuges, des stabilisateurs et/ou des pigments,
les données en poids respectives se rapportant à la masse totale du matériau de moulage thermoplastique.

2. Matériaux de moulage thermoplastiques à adhésivité réduite selon la revendication 1, **caractérisés en ce que** le matériau de moulage thermoplastique comprend :
a) 20 % en poids à 50 % en poids de bitume dur ;
b) 20 % en poids à 80 % en poids d'un polymère thermoplastique ; et
c) 0 % en poids à 40 % en poids d'additifs ; les données en poids respectives se rapportant à la masse totale du matériau de moulage thermoplastique.

3. Matériaux de moulage thermoplastiques selon la revendication 1 ou 2, **caractérisés en ce que** la fraction de bitume du matériau de moulage thermoplastique est exclusivement un bitume dur.

4. Matériaux de moulage thermoplastiques selon l'une quelconque des revendications précédentes, **caractérisés en ce que** le polymère thermoplastique comprend un copolymère d'éthylène constitué d'éthylène et d'un ester de vinyle, d'éthylène et d'une α-oléfine, un ester alkylique d'un acide alcénique et/ou leurs mélanges.

5. Matériaux de moulage thermoplastiques selon la revendication 4, **caractérisés en ce que** l'ester de vinyle est un ester d'un acide alcanecarboxylique en C₂-C₃, **en ce que** l'ester alkylique est un ester alkylique en C₁-C₄ d'un acide alcénique en C₃-C₄ et **en ce que** le copolymère d'éthylène/α-oléfine est un copolymère linéaire d'éthylène et d'une ou de plusieurs α-oléfines identiques ou différentes.

6. Matériaux de moulage thermoplastiques selon la revendication 5, **caractérisés en ce que** le copolymère d'éthylène/α-oléfine présente une densité de 0,87 à 0,92 g/cm³ et/ou un indice de fluidité de 0,5 à 20,0 g/10 min.

7. Matériaux de moulage thermoplastiques selon l'une quelconque des revendications précédentes, **caractérisés en ce que** le matériau de moulage thermoplastique comprend :
a) 20 % en poids à 50 % en poids de bitume dur présentant une pénétration selon DIN 52010 à 25 °C ≤ 3 x 1/10 mm et un point de ramollissement RuK selon DIN 52011 ≥ 120 °C ;
b) 0 % en poids à 50 % en poids d'un copolymère d'éthylène, qui comprend sous forme copolymérisée 10 % en poids à 30 % en poids d'un ester de vinyle d'un acide alcanecarboxylique en C₂-C₃ et/ou d'un ester alkylique en C₁-C₄ d'un acide alcénique en C₃-C₄ et/ou leurs mélanges ;
c) ≥ 20 % en poids d'un copolymère essentiellement linéaire d'éthylène avec une ou plusieurs α-oléfines, ce copolymère présentant une densité de 0,87 à 0,92 g/cm³ et/ou un indice de fluidité de 0,5 à 20,0 g/10 min ; et
d) 0 % en poids à 40 % en poids d'additifs, à chaque fois par rapport à la masse totale du matériau de moulage thermoplastique.

8. Matériaux de moulage thermoplastiques selon l'une quelconque des revendications précédentes, **caractérisés en ce que** la surface extérieure humide du matériau de moulage présente un pH ≥ 4.

9. Utilisation des matériaux de moulage thermoplastiques selon l'une quelconque des revendications précédentes pour la fabrication de corps moulés.

10. Utilisation des matériaux de moulage thermoplastiques selon l'une quelconque des revendications 1 à 8 en tant que feuilles, en tant que pièces moulées par injection, en tant que matériau d'isolation électrique, en tant que matériaux de construction routière, en tant que matériaux de couverture et/ou en tant qu'agents d'étanchéité.
